# EUROPEAN PATENT SPECIFICATION

(11) **EP 3 112 566 B1**
(45) Date of publication and mention of the grant of the patent: **22.08.2018**
(21) Application number: 16175934.5
(22) Date of filing: 23.06.2016
(51) Int. Cl.: E05B 83/10

(54) **FASTENER FOR THE BODIES OF COMMERCIAL VEHICLES AND METHOD FOR MOUNTING PARTS OF IT**
BEFESTIGUNGSELEMENT FÜR NUTZFAHRZEUGKAROSSERIEN UND VERFAHREN ZUM MONTIEREN VON TEILEN DAVON
ATTACHE POUR LES CORPS DE VÉHICULES UTILITAIRES ET PROCÉDÉ POUR MONTER DES PARTIES DE CELUI-CI

(30) Priority: 03.07.2015 IT UB20151913
(43) Date of publication of application: 04.01.2017
(73) Proprietor: Pastore & Lombardi S.p.A., Bologna (IT)
(72) Inventor: Hilbe, Luca, 40057 Cadriano di Granarolo Emilia (Bologna) (IT)
(74) Representative: Ponchiroli, Simone

(56) References cited:
- EP-A1- 1 460 210
- EP-A1- 1 564 354
- EP-A2- 1 488 989
- DE-A1- 10 326 005
- DE-U1-202015 102 055
- JP-U- H0 335 172
- US-A- 2 568 058

## Description

This invention relates to a fastener for the bodies of commercial vehicles and a method for mounting several parts of it.

In particular, it relates to fasteners of the rotating type commonly used for doors or the like of commercial vehicle superstructures.

It should be noticed that in the context of this invention, the expression bodies of commercial vehicles refers to both those of the removable type (such as containers) and those of the type not removable from the rest of the vehicle.

In general, rotating bar-type fasteners comprise a bar extending substantially along a straight longitudinal axis and which in use pivots on a first part of a body of a commercial vehicle according to an axis of rotation parallel to the longitudinal axis of the bar itself, and a contact element fixable to a second part of the body.

The first part and the second part of the body are movable at least one relative to the other, but in most cases the first part is movable whilst the second part is fixed to the frame of the body.

Non-rotatably mounted on the rotating bar, so that they rotate with it, there is at least one engaging element designed for engaging with and disengaging from the contact element, and an operating lever which the user uses to in use cause rotation of the bar and the engaging element for opening or closing the fastener.

In general, especially in the case of use of the fastener for doors of commercial vehicles, the fastener comprises at least two engaging elements and two corresponding contact elements which are positioned at the ends of the bar, one above and one below the door.

In turn, the operating lever may be independent of the engaging elements and be fixed to an intermediate portion of the bar, or it may at least partly constitute one piece with one of the engaging elements.

Various examples of fasteners of the type which is the subject matter of this invention are described in patent documents US 2380302, US 2751860, US 1952112, US 5046770, EP 953496, EP 1488989, DE 9419874U, EP 893558, US 2568058, DE 20012724U, US 2592647, JP 3-35172, GB 1249923, DE 6926694U, US 4268077, DE 2205245, EP 366 508.

As regards the connection of the operating lever and/or of each engaging element to the rotating bar, over the years various solutions have been put forward which included either permanent connections (that is to say, not removable and therefore preferred both for security of the load transported and for customs reasons) or non-permanent connections. Prior art connections of the former type include connections made by welding and those made using rivets through the operating lever, or the engaging element, and the bar inserted in a housing hole made respectively in the operating lever or in the engaging element (see for example US 2568058). The former, permanent connections, have the advantage of optimum structural rigidity between the elements connected (unless the weld breaks) but the disadvantage of relatively complex working (the operator needs a degree of expertise) and such that it may damage the parts involved.

The latter, non-permanent connections, in contrast have the advantage of quick, easy fitting and no negative effects on the parts connected, but the disadvantage of an unstable connection with play between the various parts. Therefore, they allow the parts to move relative to each other (play and movements that tend to increase over time following use of the fastener).

In an attempt to limit these latter disadvantages, in EP 1488989 it was also suggested that a rivet should be used together with a bushing, inserting through the bar and respectively through the operating lever or through the engaging element, first a bushing substantially shaped to match the hole available, thereby attempting to minimise the play between the parts, and then inserting the rod of the rivet in the bushing.

However, even this solution has several disadvantages both because it is relatively expensive, requiring more elements for the connection, and because it is actually unable to create a connection truly stable like those created by welding.

In this context, the technical purpose which forms the basis of this invention is to provide a fastener for the bodies of commercial vehicles and a method for mounting several parts of it which overcome the above-mentioned disadvantages.

In particular, the technical purpose of this invention is to provide a fastener for the bodies of commercial vehicles and a method for mounting several parts of it, in which the connection of engaging elements and/or operating lever to the rotating bar is on one hand simple and relatively inexpensive, and on the other hand guarantees the connection a stability comparable with that obtainable by welding.

The technical purpose specified and the aims indicated are substantially achieved by a fastener for the bodies of commercial vehicles and a method for mounting several parts of it, as described in the appended claims.

Further features and the advantages of this invention are more apparent in the detailed description, with reference to the accompanying drawings which illustrate several preferred, nonlimiting embodiments of a fastener for the bodies of commercial vehicles and a method for mounting several parts of it, in which:
- Figure 1 is a schematic view of a body of a commercial vehicle equipped with a fastener made in accordance with this invention;
- Figure 2 is a front view of a detail of a fastener in accordance with this invention that is also used in the fastener illustrated in Figure 1;
- Figure 3 is a bottom view, partly in cross-section, of the detail of Figure 2; in particular, only part of the connecting body is shown in cross-section, at the seat for a permanent coupling element which is in turn not shown in cross-section;
- Figure 4 is a side view of a first embodiment of a pin usable in accordance with the method according to this invention;
- Figure 5 is a cross-section of the pin of Figure 4 according to the line V - V;
- Figure 6 is a side view of a locking collar couplable to the pin of Figure 4;
- Figure 7 is a side view of a second embodiment of a pin usable in accordance with the method according to this invention;
- Figure 8 is a cross-section of the pin of Figure 7 according to the line VIII - VIII;
- Figure 9 is a side view of a locking collar couplable to the pin of Figure 7;
- Figure 10 is a side view of a third embodiment of a pin usable in accordance with the method according to this invention;
- Figure 11 is a cross-section of the pin of Figure 10 according to the line XI - XI;
- Figure 12 is a front view of a locking collar couplable to the pin of Figure 10;
- Figure 13 is an axial section of the locking collar of Figure 12;
- Figure 14 is an enlargement of Figures 5 and 11; and
- Figure 15 is an enlarged detail of Figure 8.

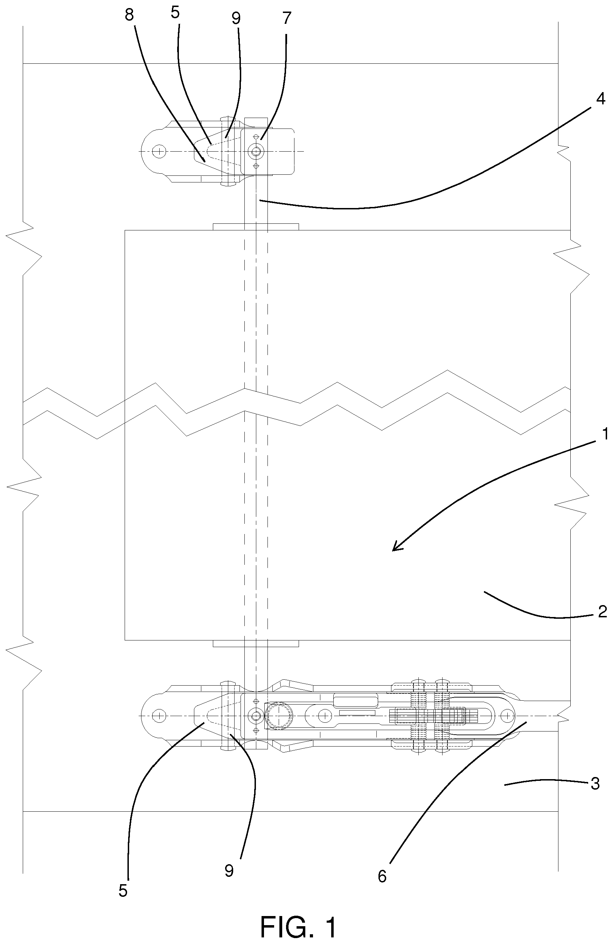

With reference to the above-mentioned figures, the numeral 1 denotes in its entirety a fastener made according to this invention, usable together with a first part 2 and a second part 3 of a body of a commercial vehicle at least one of which is movable relative to the other. Figure 1 shows the most common case in which the first part 2 (constituted of a door) is movable relative to the second part 3 (constituted of the fixed structure of the body).

In general, and similarly to prior art rotating bar fasteners, the fastener 1 according to this invention also comprises a bar 4 extending substantially along a straight longitudinal axis (meaning an axis that passes through a central point of the cross-section of the bar 4 - that is to say, a cross-section lying in a plane perpendicular to its central axis) and which is pivotable on the first part 2 of the body according to an axis of rotation parallel to the longitudinal axis. Non-rotatably mounted on the bar, so that they rotate with it, there are at least one engaging element 5 and an operating lever 6.

The engaging element 5 comprises at least one first connecting body 7 fixed to the bar 4 and a projecting engaging projection 8 which can be engaged with and disengaged from a contact element 9 that in use is fixed to the second part 3 of the body. In particular, when the fastener 1 is installed on the vehicle, the engaging projection 8 is movable following a rotation of the bar 4, between a first position in which it is disengaged from the contact element 9 and a second positioned in which it is engaged with the contact element 9 (the actual engagement of the engaging projection 8 with the contact element 9 is obviously only actually possible when the movable part is in the respective closed position 1 or very near to it).

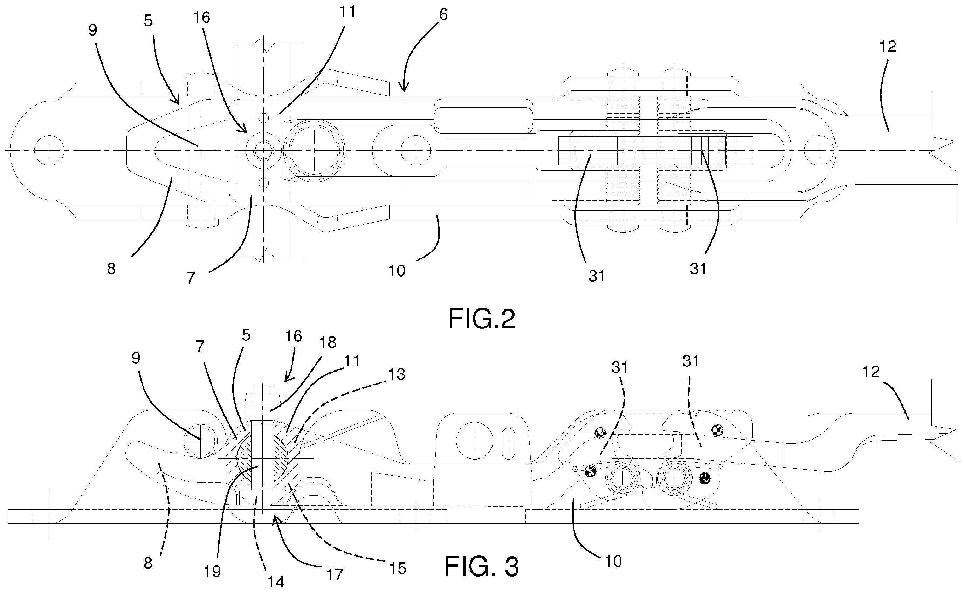

In most applications, the fastener 1 comprises at least two engaging elements 5 spaced out along the bar 4. As illustrated in Figures 2 and 3, in the known way the fastener may also comprise a base 10 for the operating lever 6, connected to the second part 3 of the body and on which safety mechanisms 31 are mounted, which can be disabled by rotation and which are designed to retain the operating lever 6 in the closed position.

The operating lever 6 comprises at least one second connecting body 11 fixed to the bar 4 and a handle 12 advantageously extending cantilever-style relative to the second connecting body 11.

Therefore, the user can cause the bar 4, and the engaging element 5, to rotate by acting on the operating lever 6 using the related handle 12.

Similarly to what occurs for prior art fasteners, also for this invention, there are two possible cases: a first case in which the operating lever 6 is independent of the engaging elements 5 and is at a distance from them along the longitudinal axis, and a second case, illustrated in Figures 1 to 3, in which at least one part of the operating lever 6 constitutes one piece with an engaging element 5. In the latter case, the related first connecting body 7 and second connecting body 11 coincide, and the engaging projection 8 and the handle 12 extend on opposite sides of the bar 4.

The innovative aspects of this invention relate to the method of connection of the bar 4 and at least one of either the first connecting body 7 or the second connecting body 11 (advantageously both).

For simplicity, hereinafter reference will be made generically to the connecting body 7, 11 to indicate respectively the first connecting body 7 and/or the second connecting body 11 depending whether the innovative connecting method, developed in the context of this invention, is used to connect the bar 4 respectively to an engaging element 5 and/or to the operating lever 6.

According to this invention, the connecting body 7, 11 comprises at least one main hole 13, advantageously a through hole, extending substantially parallel to the longitudinal axis and in which the bar 4 is inserted, and at least one first fixing hole 14, passing from one side to the other, extending transversally to the longitudinal axis (advantageously orthogonally to it and/or along an axis incident with it) and intersecting the main hole 13. In other words, two holes diametrically opposed to each other relative to the longitudinal axis extend from the main hole 13 towards the outside of the connecting body 7, 11.

In turn, the bar 4 comprises at least one second fixing through hole 15 extending transversally to the longitudinal axis (preferably perpendicularly to it), which is positioned inside the main hole 13 of the connecting body 7, 11 and which is axially aligned with the first fixing hole 14 (with both of its parts extending diametrically opposed from the main hole 13). Advantageously, both the first fixing hole 14 and the second fixing hole 15 have circular cross-sections.

The non-rotatable mounting of the connecting body 7, 11 to the bar 4 is guaranteed by a permanent coupling element 16 comprising a pin 17 and a locking collar 18. In turn, the pin 17 comprises a shank 19 having a first end 20 equipped with an enlarged head 21 (such that it cannot enter the first fixing hole 14) and a second end 22 to which the locking collar 18 is rigidly connected.

According to this invention, the shank 19 is inserted with interference fit both in the first fixing hole 14 and in the second fixing hole 15 in order to substantially prevent movements of the bar 4 and the connecting body 7, 11 relative to each other. The expression insertion with interference fit means that before insertion the cross-section of the hole is at least locally smaller than that of the shank 19, so that insertion of the latter in the hole is only possible subject to its localised deformation.

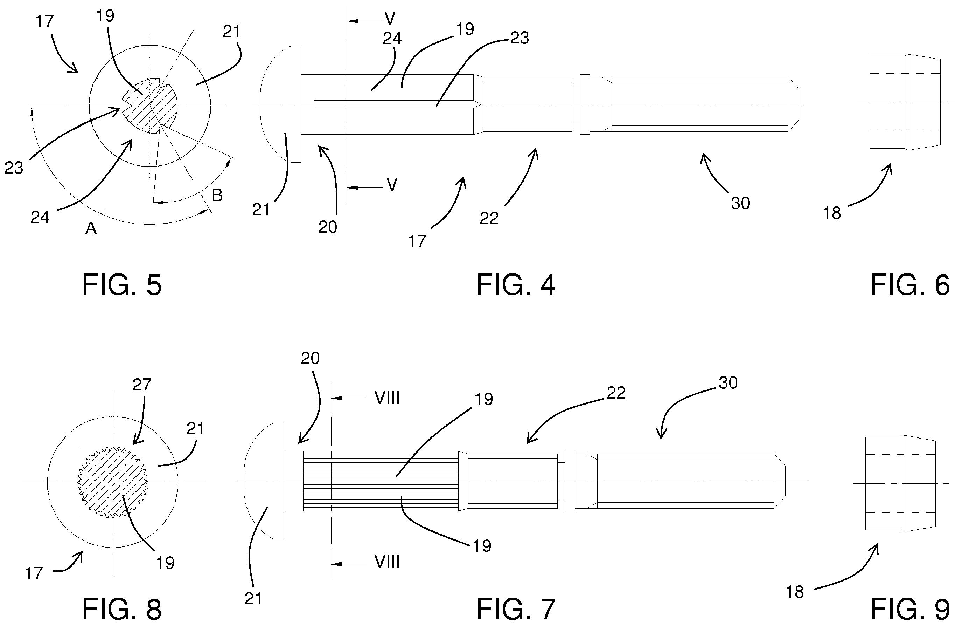

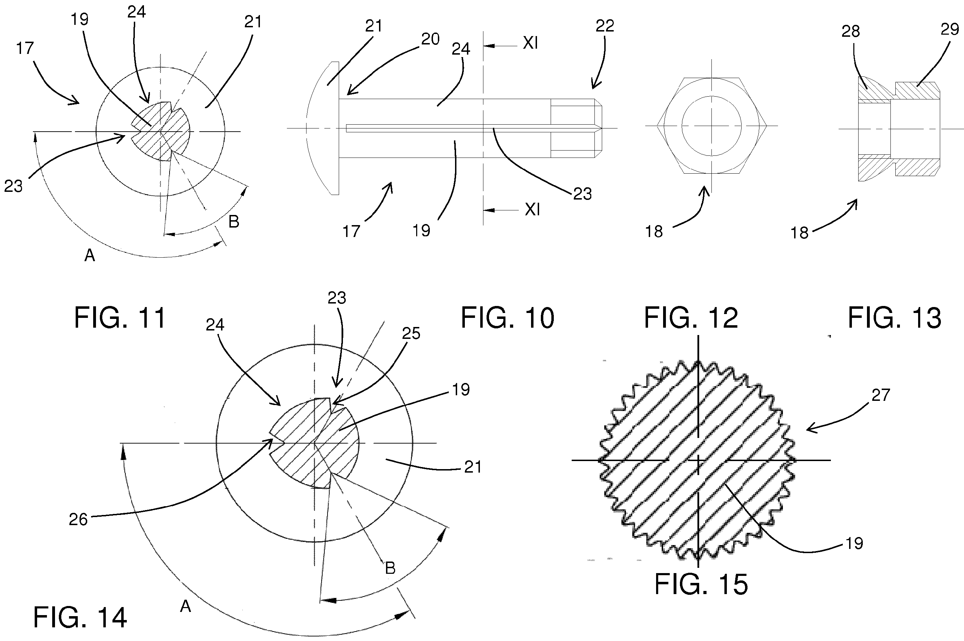

Moreover, in the preferred embodiments, the permanent coupling element 16 is a shear bolt. In the case in Figures 4 to 9 it is the pin 17 that is a shear pin, whilst in the case in Figures 10 to 13 it is the locking collar 18 that is a shear nut (Figure 13). However, hereinafter further details will be supplied regarding that.

Returning to the pin 17, in the preferred embodiments the related shank 19 is solid and is shaped in such way that it behaves like a spring pin (and therefore it is advantageously made of a material like those commonly used for spring pins or for nuts and bolts). For that purpose, in the preferred embodiments the shank 19 externally comprises a plurality of projecting elements and/or grooves, extending parallel to the axis of the shank 19, and which are present at least at the part of the shank 19 inserted in the first fixing hole 14 and in the second fixing hole 15.

In particular, in the embodiments of Figures 4, 5, 10 and 11, the shank 19 has a cross-section (that is to say, in a plane perpendicular to its own axis of extension) whose outer edge defines alternating recesses 23 and arched stretches 24, distributed along the self-same outer edge around the central axis (three of each in the cases illustrated, in which they are evenly distributed and each recess 23 is spaced from the others by an angle A of 120°). Each recess 23, which advantageously extends for an angle to the centre much smaller than the arched stretches 24, also comprises at least one first side 25 and at least one second side 26, which in the accompanying figures are arranged in a V to form the recess 23 (forming an angle B of approximately 70°). Each arched stretch 24 in turn extends from the first side 25 of one recess 23 to the second side 26 of the next recess 23 (the next along the length of the outer edge), and in the embodiment illustrated extends on a circle centred at a point located in an intermediate position between the centre of the shank 19 and the recess 23 diametrically opposed to the arched stretch 24, along the bisecting line of the angle formed by the sides 25, 26 of the self-same recess 23. Moreover, advantageously, the connecting points of each side 25, 26 to the corresponding arched stretch 24 are the points of the outer edge furthest from the centre of the shank 19, and to achieve a good coupling with interference fit, their distance from the axis of the shank 19 will advantageously be greater than the radius of the circular cross-section of the corresponding stretch of the first fixing hole 14 or of the second fixing hole 15 in which the shank 19 must be inserted, whilst the bottom of the recess 23 and/or at least part of the arched stretches 24 will be at a distance from the central axis that is less than said radius. However, in the preferred embodiment, the structure of the shank 19 described above is made in a similar way to what is currently required for solid round head spring pins, that is to say, in accordance with DIN 1476, ISO 8746, UNI 7691.

In contrast, in the embodiment of Figures 7 and 8, the shank 19 has a cross-section with a notched outer edge 27, preferably evenly notched. In this case, advantageously, the maximum radial projection of the notching will be greater than the radius of the cross-section of the corresponding stretch of the first fixing hole 14 or of the second fixing hole 15, whilst the minimum radial projection of the notching will be less than said radius.

Regarding the locking collar 18 and its fixing on the shank 19, advantageously the second end 22 of the shank 19 is that typical of shear bolts (that is to say, equipped with a plurality of annular grooves positioned in a plane perpendicular to the axis of the shank) and the locking collar 18 is coupled to the second end 22 by its own localised deformation obtained by crushing, which causes it to mould into the grooves of the second end of the shank (as is typical for shear-type connections). It should be noticed that, for simplicity, in the accompanying drawings the grooves have been schematically illustrated in the way normally used for threads.

In the simpler embodiments illustrated in Figures 6 and 9, the locking collar 18 is constituted of a single annular body which before the fixing is smooth on the inside and after the fixing in contrast is deformed in such a way that it is moulded onto the second end 22 of the shank 19.

In contrast, in the version illustrated in Figures 12 and 13, the collar comprises a first annular portion 28 and a second annular portion 29 side by side. The first annular portion 28 is intended, once mounting is complete, to be closer to the enlarged head 21 than the second annular portion 29. Moreover, the first annular portion 28 is internally threaded so that it can be screwed onto the second end 22 of the shank 19, whilst the second annular portion 29 is a disposable portion intended to be detached from the first annular portion once mounting is complete.

With reference to the method according to this invention, to non-rotatably mount an engaging element 5 or an operating lever 6 on a bar 4 of a fastener 1 for the bodies of commercial vehicles, it is advantageously practically applied in the case of the fastener 1 described above.

Consequently, what is described above with reference to the fastener 1, and what will be described below with reference to the method must also be considered valid respectively for the method and for the fastener 1 (if compatible).

In its most general form, the method according to this invention can be applied in all cases in which the bar 4 of the fastener 1 extends substantially along a straight longitudinal axis, the engaging element 5 comprises at least one first connecting body 7 to be fixed to the bar 4 and the operating lever 6 comprises at least one second connecting body 11 to be fixed to the bar 4. Similarly to what was done with reference to the fastener 1, also with reference to the method, for simplicity, hereinafter reference will be made generically to the connecting body 7, 11 to indicate respectively the first connecting body 7 or the second connecting body 11 depending whether respectively the engaging element 5 or the operating lever 6 is mounted on the bar 4.

The method comprises first the operating step of making in the connecting body 7, 11 at least one main hole 13 extending along a first direction, and at least one first fixing through hole 14 extending transversally to the first direction and intersecting the main hole 13. The method also comprises (not necessarily at the same time), making in the bar 4 at least one second fixing through hole 15 extending transversally to the longitudinal axis. Those operating steps may be carried out either during production respectively of the connecting body 7, 11 and of the bar 4, or afterwards.

Then, the method comprises inserting the bar 4 in the main hole 13 and axially aligning the first fixing hole 14 with the second fixing hole 15, and then connecting together the bar 4 and the connecting body 7, 11 using a permanent coupling element 16 inserted in the first fixing hole 14 and in the second fixing hole 15. In particular, the connecting step comprises using a permanent coupling element 16 of the type described above (with a shank 19 having a first end 20 equipped with an enlarged head 21 and a second end 22 that is grooved or threaded, and a locking collar 18) and inserting the shank 19 both in the first fixing hole 14 and in the second fixing hole 15, in both cases with interference fit, until the enlarged head 21 is brought into contact on the connecting body 7, 11 and until the second end 22 of the shank 19 at least partly comes out of the opposite side of the first fixing hole 14.

At that point, the locking collar 18 is shear-mounted on the second end 22. Shear mounting may be carried out in various ways, depending on requirements and depending on the permanent coupling element 16 used.

In particular, in the two cases illustrated in Figures 4 to 9 (the permanent coupling element 16 of Figure 4 to 6 is that used in the fastener 1 of Figures 1 to 3), the pin 17 also comprises a disposable projection 30 axially aligned with the shank 19 and connected in one piece to the second end 22. In that case, the step of shear mounting the locking collar 18 comprises a substantially simultaneous axial pulling action on the disposable projection 30 and a crushing of the locking collar 18 on the second end 22.

As regards operation of the fastener 1 made in accordance with this invention, it is similar to that of prior art fasteners and obviously derives from the above structural description and the accompanying drawings.

Finally, it should be noticed that it was possible to provide this invention in particular thanks to the prior devising of the innovative coupling element described above (some preferred examples of which are illustrated in the accompanying figures from 4 to 15). Since there are no known coupling elements that are even similar to the one devised by the Applicant in any sector, it is expected as of now that the latter may itself in future be the subject of its own patent protection irrespective of the sector of use, by the filing of divisional applications.

This invention brings important advantages.

In fact, thanks to this invention, it was possible to provide a fastener for the bodies of commercial vehicles and a method for mounting several parts of it, in which the connection of engaging elements and/or operating lever to the rotating bar is on one hand simple and relatively inexpensive, and on the other hand guarantees the connection a stability comparable with that obtainable by welding.

Finally, it should be noticed that this invention is relatively easy to produce and that even the cost linked to implementing the invention is not very high.

The invention described above may be modified and adapted in several ways without thereby departing from the scope of the inventive concept.

All details of the invention may be substituted with other technically equivalent elements and the materials used, as well as the shapes and dimensions of the various components, may vary according to requirements.

## Claims

1. A fastener for the bodies of commercial vehicles, comprising:
a bar (4) extending substantially along a straight longitudinal axis and which is pivotable on a first part (2) of a body of a commercial vehicle according to an axis of rotation parallel to the longitudinal axis;
a contact element (9) fixable to a second part (3) of the body, the first part (2) and the second part (3) being at least one movable relative to the other;
at least one engaging element (5) non-rotatably mounted on the bar (4) in such a way that it rotates with the bar, and comprising at least one first connecting body (7) fixed to the bar (4) and a projecting engaging projection (8), the engaging projection (8) being movable following a rotation of the bar (4), between a first position in which it is disengaged from the contact element (9) and a second position in which it is engaged with the contact element (9);
an operating lever (6) non-rotatably mounted on the bar (4) in such a way that it rotates with the bar, and comprising at least one second connecting body (11) fixed to the bar (4) and a handle (12), a user being able to cause a rotation of the bar (4) and of the engaging element (5) by acting on the operating lever (6);
wherein:
at least one of either the first connecting body (7) or the second connecting body (11) comprises at least one main hole (13) extending substantially parallel to the longitudinal axis and in which the bar (4) is inserted, and at least one first fixing through hole (14) extending transversally to the longitudinal axis and intersecting the main hole (13); and
the bar (4) comprises at least one second fixing through hole (15) extending transversally to the longitudinal axis, and axially aligned with the first fixing hole (14) inside the main hole (13); and
said at least one of either the first connecting body (7) or the second connecting body (11) being non-rotatably fixed to the bar (4) by a permanent coupling element (16) comprising a pin (17) and a locking collar (18), the pin (17) in turn comprising a shank (19) comprising a first end (20) equipped with an enlarged head (21) and a second end (22) to which the locking collar (18) is rigidly connected, **characterised in that** the shank (19) is inserted with interference fit both in the first fixing hole (14) and in the second fixing hole (15) for substantially preventing movements of the bar (4) and said at least one of either the first connecting body (7) or the second connecting body (11) relative to each other.

2. The fastener according to claim 1, **characterised in that** the first fixing hole (14) and the second fixing hole (15) have circular cross-sections.

3. The fastener according to claim 1 or 2, **characterised in that** the shank (19) of the pin (17) has the shape of a solid spring pin.

4. The fastener according to claim 1, 2 or 3, **characterised in that** the shank (19) externally comprises a plurality of projecting elements with axial extension and/or grooves with axial extension, at least at a part of it inserted in the first fixing hole (14) and in the second fixing hole (15).

5. The fastener according to claim 4, **characterised in that** the shank (19) has a cross-section with an outer edge comprising alternating recesses (23) and arched stretches (24), each recess (23) comprising at least one first side (25) and at least one second side (26).

6. The fastener according to claim 5, **characterised in that** each arched stretch (24) extends from the first side (25) of one recess (23) to the second side (26) of the next recess (23) along the length of the outer edge.

7. The fastener according to claim 4, **characterised in that** the shank (19) has a cross-section with a notched outer edge (27).

8. The fastener according to any one of the preceding claims, **characterised in that** the permanent coupling element (16) is of the shear type.

9. The fastener according to any one of the preceding claims, **characterised in that** the locking collar (18) is a collar for shear bolts or a shear nut.

10. The fastener according to any one of the preceding claims, **characterised in that** the second end (22) of the shank (19) is grooved or threaded and the locking collar (18) is coupled to the second end (22) by its own localised deformation.

11. The fastener according to any one of the preceding claims, **characterised in that** the collar comprises a first annular portion (28), at least in use closer to the enlarged head (21), which is internally threaded and screwed onto the second end (22) of the shank (19), and a second annular portion (29) which is disposable.

12. The fastener according to any one of the preceding claims, **characterised in that** it comprises at least one engaging element (5) which constitutes one piece with at least one part of the operating lever (6), the related first connecting body (7) and second connecting body (11) coinciding, and the engaging projection (8) and the handle (12) extending on opposite sides of the bar (4).

13. A method for non-rotatably mounting an engaging element or an operating lever on a bar of a fastener for the bodies of commercial vehicles, wherein the bar (4) extends substantially along a straight longitudinal axis, the engaging element (5) comprises at least one first connecting body (7) to be fixed to the bar (4) and the operating lever (6) comprises at least one second connecting body (11) to be fixed to the bar (4), the method comprising the operating steps of:
making respectively in the first connecting body (7) or in the second connecting body (11), at least one main hole (13) extending along a first direction, and at least one first fixing through hole (14) extending transversally to the first direction and intersecting the main hole (13);
making in the bar (4) at least one second fixing through hole (15) extending transversally to the longitudinal axis;
inserting the bar (4) in the main hole (13) and axially aligning the first fixing hole (14) and the second fixing hole (15); and
connecting to each other the bar (4) and respectively the first connecting body (7) or the second connecting body (11) by means of a permanent coupling element (16);
wherein the connecting step comprises:
using a permanent coupling element (16) comprising a shank (19) having a first end (20) equipped with an enlarged head (21) and a second end (22) which is grooved or threaded, and a locking collar (18);
inserting the shank (19) with interference fit both in the first fixing hole (14) and in the second fixing hole (15) until the enlarged head (21) makes contact respectively on the first connecting body (7) or on the second connecting body (11), and until the second end (22) of the shank (19) at least partly comes out of the opposite side of the first fixing hole (14);
shear mounting the locking collar (18) on the second end (22).

14. The method according to claim 13, wherein the shank (19) is part of a pin (17) which also comprises a disposable projection (30) axially aligned with the shank (19) and connected in one piece to the second end (22), and wherein the step of shear mounting the locking collar (18) comprises substantially simultaneously performing an axial pulling action on the disposable projection (30) and a crushing of the locking collar (18) on the second end (22).

15. The method according to claim 13 or 14, wherein a pin (17) with a solid shank (19) having the shape of a spring pin is used.

16. The method according to any one of claims 13 to 15, wherein a pin (17) is used which has a shank (19) that, at least at a part of it to be inserted in the first fixing hole (14) and in the second fixing hole (15), externally comprises a plurality of projecting elements with axial extension and/or grooves with axial extension.

17. The method according to claim 16, wherein a pin (17) is used which has a shank (19) having a cross-section delimited by an outer edge comprising alternating recesses (23) and arched stretches (24) distributed along it, each recess (23) comprising at least one first side (25) and at least one second side (26).

18. The method according to claim 16, wherein a shank (19) is used which has a cross-section with a notched outer edge (27).

## Patentansprüche

1. Ein Befestigungselement für Nutzfahrzeugkarosserien, Folgendes umfassend: eine Stange (4), die sich im Wesentlichen auf einer geraden Längsachse erstreckt und die an einem ersten Teil (2) einer Karosserie eines Nutzfahrzeugs auf einer Rotationsachse parallel zur Längsachse gedreht werden kann;
ein Kontaktelement (9), das an einem zweiten Teil (3) der Karosserie befestigt werden kann, wobei von dem ersten Teil (2) und dem zweiten Teil (3) mindestens einer davon in Bezug auf den anderen beweglich ist; mindestens ein Greifelement (5), das nicht drehbar solcherart an der Stange (4) montiert ist, dass es sich zusammen mit der Stange dreht, und mindestens einen ersten Verbindungskörper (7) umfassend, der an der Stange (4) befestigt ist, und einen herausragenden Greifvorsprung (8), der Greifvorsprung (8) ist dabei, einer Drehung der Stange (4) folgend, zwischen einer ersten Position, in der er vom Kontaktelement (9) gelöst ist, und einer zweiten Position, in der er am Kontaktelement (9) greift, beweglich; einen Betätigungshebel (6), der nicht drehbar solcherart an der Stange (4) montiert ist, dass er sich mit der Stange dreht, und mindestens einen zweiten Verbindungskörper (11) umfassend, der an der Stange (4) befestigt ist, und einen Griff (12), ein Benutzer ist dabei imstande, eine Drehung der Stange (4) und des Greifelements (5) hervorzurufen, indem er auf den Betätigungshebel (6) einwirkt; wobei:
mindestens einer von dem ersten Verbindungskörper (7) oder dem zweiten Verbindungskörper (11) mindestens eine Hauptöffnung (13) umfasst, die sich im Wesentlichen parallel zur Längsachse erstreckt, und in welche die Stange (4) eingeführt wird, und mindestens eine erste, durchgehende Befestigungsöffnung (14), welche sich quer zur Längsachse erstreckt und sich mit der Hauptöffnung (13) überschneidet; und die Stange (4) umfasst mindestens eine zweite durchgehende Befestigungsöffnung (15), welche sich quer zur Längsachse erstreckt und axial an der ersten Befestigungsöffnung (14) in der Hauptöffnung (13) ausgerichtet ist; und
mindestens einer von dem ersten Verbindungskörper (7) oder dem zweiten Verbindungskörper (11) ist dabei nicht drehbar an der Stange (4) fixiert, durch ein permanentes Kupplungselement (16), das einen Stift (17) und einen Klemmring (18) umfasst, der Stift (17) umfasst seinerseits einen Schaft (19), welcher ein erstes Ende (20), das mit einem verbreiterten Kopf (21) ausgestattet ist, und ein zweites Ende (22), mit dem der Klemmring (18) starr verbunden ist, umfasst, **gekennzeichnet dadurch, dass** der Schaft (19) übergreifend sowohl in die erste Befestigungsöffnung (14) als auch in die zweite Befestigungsöffnung (15) eingefügt ist, um im Wesentlichen Bewegungen der Stange (4) und mindestens eines von dem besagten ersten Verbindungskörper (7) oder zweiten Verbindungskörper (11) in Bezug aufeinander zu verhindern.

2. Das Befestigungselement nach dem Patentanspruch 1, **gekennzeichnet dadurch, dass** die erste Befestigungsöffnung (14) und die zweite Befestigungsöffnung (15) kreisförmige Querschnitte haben.

3. Das Befestigungselement nach den Patentansprüchen 1 oder 2, **gekennzeichnet dadurch, dass** der Schaft (19) des Stifts (17) die Form eines massiven Federstifts hat.

4. Das Befestigungselement nach den Patentansprüchen 1, 2 oder 3, **gekennzeichnet dadurch, dass** der Schaft (19) außen eine Mehrzahl vorspringender Elemente mit einer axialen Erstreckung und/oder Rillen mit einer axialen Erstreckung hat und mindestens ein Teil davon in die erste Befestigungsöffnung (14) und in die zweite Befestigungsöffnung (15) eingeführt ist.

5. Das Befestigungselement nach dem Patentanspruch 4, **gekennzeichnet dadurch, dass** der Schaft (19) einen Querschnitt mit einem Außenrand hat, der abwechselnd Vertiefungen (23) und gewölbte Abschnitte (24) umfasst, wobei jede Vertiefung (23) mindestens eine erste Seite (25) und mindestens eine zweite Seite (26) umfasst.

6. Das Befestigungselement nach dem Patentanspruch 5, **gekennzeichnet dadurch, dass** sich jeder gewölbte Abschnitt (24) über die Länge des äußeren Rands von der ersten Seite (25) einer Vertiefung (23) zur zweiten Seite (26) der nächsten Vertiefung (23) erstreckt.

7. Das Befestigungselement nach dem Patentanspruch 4, **gekennzeichnet dadurch, dass** der Schaft (19) einen Querschnitt mit einem gekerbten Außenrand (27) hat.

8. Das Befestigungselement nach jedem der vorherigen Patentansprüche, **gekennzeichnet dadurch, dass** das permanente Kupplungselement (16) vom Typ einer Schere ist.

9. Das Befestigungselement nach jedem der vorherigen Patentansprüche, **gekennzeichnet dadurch, dass** der Klemmring (18) ein Bund für Scherschrauben oder eine Abreißmutter ist.

10. Das Befestigungselement nach jedem der vorherigen Patentansprüche, **gekennzeichnet dadurch, dass** das zweite Ende (22) des Schafts (19) gerillt ist oder ein Gewinde hat und der Klemmring (18) mit dem zweiten Ende (22) durch seine eigene, örtlich begrenzte Verformung gekoppelt ist.

11. Das Befestigungselement nach jedem der vorherigen Patentansprüche, **gekennzeichnet dadurch, dass** der Ring einen ersten ringförmigen Abschnitt (28) umfasst, der zumindest im Gebrauch näher am verbreiterten Kopf (21) ist, der ein Innengewinde hat und am zweiten Ende (22) des Schafts (19) angeschraubt ist, und einen zweiten ringförmigen Abschnitt (29), welcher frei ist.

12. Das Befestigungselement nach jedem der vorherigen Patentansprüche, **gekennzeichnet dadurch, dass** es mindestens ein Greifelement (5) umfasst, welches ein einziges Teil mit mindestens einem Teil des Betätigungshebels (6) bildet, wobei der entsprechende erste Verbindungskörper (7) und der zweite Verbindungskörper (11) übereinstimmen, und sich der Greifvorsprung (8) und der Griff (12) auf gegenüberliegenden Seiten der Stange (4) erstrecken.

13. Ein Verfahren zum nicht drehbaren Montieren eines Greifelements oder eines Betätigungshebels an der Stange eines Befestigungselements für Nutzfahrzeugkarosserien, wobei sich die Stange (4) im Wesentlichen auf einer geraden Längsachse erstreckt, das Greifelement (5) umfasst mindestens einen ersten Verbindungskörper (7), der an der Stange (4) zu befestigen ist, und der Betätigungshebel (6) umfasst mindestens einen zweiten Verbindungskörper (11), der an der Stange (4) zu befestigen ist, das Verfahren umfasst dabei folgende Betätigungsschritte:
Im ersten Verbindungskörper (7) beziehungsweise im zweiten Verbindungskörper (11) mindestens eine Hauptöffnung (13) zu schaffen, die sich in eine erste Richtung erstreckt, und mindestens eine durchgehende Befestigungsöffnung (14), welche sich quer zur ersten Richtung erstreckt und die Hauptöffnung (13) überschneidet;
in der Stange (4) mindestens eine zweite durchgehende Befestigungsöffnung (15) zu schaffen, welche sich quer zur Längsachse erstreckt; die Stange (4) in die Hauptöffnung (13) einzuführen und die erste Befestigungsöffnung axial zur zweiten Befestigungsöffnung (15) auszurichten; und die Stange (4) sowie den ersten Verbindungskörper (7) beziehungsweise den zweiten Verbindungskörper (11) durch ein permanentes Kupplungselement (16) miteinander zu verbinden; wobei der Verbindungsschritt Folgendes umfasst:
ein permanentes Kupplungselement (16) zu verwenden, welches einen Schaft (19) umfasst, der ein erstes Ende (20) hat, das mit einem verbreiterten Kopf (21) ausgestattet ist, und ein zweites Ende (22), das gerillt ist oder ein Gewinde hat, und einen Klemmring (18);
den Schaft (19) übergreifend sowohl in die erste Befestigungsöffnung (14) als auch in die zweite Befestigungsöffnung (15) einzuführen, bis der verbreiterte Kopf (21) mit dem ersten Verbindungskörper (7) beziehungsweise mit dem zweiten Verbindungskörper (11) in Berührung kommt, und bis das zweite Ende (22) des Schafts (19) zumindest teilweise aus der gegenüberliegenden Seite der ersten Befestigungsöffnung (14) heraustritt; wobei der Klemmring (18) scherenförmig am zweiten Ende (22) montiert wird.

14. Das Verfahren nach dem Patentanspruch 13, wobei der Schaft (19) Teil eines Stifts (17) ist, welcher auch einen freien Vorsprung (30) hat, der axial am Schaft (19) ausgerichtet und in einem Teil mit dem zweiten Ende (22) verbunden ist, und wobei der Schritt des scherenförmigen Befestigens des Klemmrings (18) im Wesentlichen umfasst, gleichzeitig einen axialen Zug auf den freien Vorsprung (30) und ein Quetschen des Klemmrings (18) am zweiten Ende (22) auszuüben.

15. Das Verfahren nach den Patentansprüchen 13 oder 14, wobei ein Stift (17) mit einem massiven Schaft (19), der die Form eines Federstifts hat, verwendet wird.

16. Das Verfahren nach jedem der Patentansprüche 13 bis 15, wobei ein Stift (17) verwendet wird, der einen Schaft (19) hat, welcher, zumindest in einem Teil, der in die erste Befestigungsöffnung (14) und in die zweite Befestigungsöffnung (15) einzuführen ist, außen eine Mehrzahl vorspringender Elemente mit einer axialen Erstreckung und/oder Rillen mit einer axialen Erstreckung hat.

17. Das Verfahren nach dem Patentanspruch 16, wobei ein Stift (17) verwendet wird, der einen Schaft (19) hat, welcher einen Querschnitt hat, der durch einen Außenrand begrenzt ist, auf dem abwechselnd Vertiefungen (23) und gewölbte Abschnitte (24) verteilt sind, jede Vertiefung (23) umfasst dabei mindestens eine erste Seite (25) und mindestens eine zweite Seite (26).

18. Das Verfahren nach dem Patentanspruch 16, wobei ein Schaft (19) verwendet wird, der einen Querschnitt mit einem gekerbten Außenrand (27) hat.

## Revendications

1. Un élément de fixation pour les carrosseries de véhicules utilitaires, comprenant:
une barre (4) s'étendant essentiellement le long d'un axe longitudinal rectiligne et pouvant être montée de façon pivotante sur une première partie (2) d'une carrosserie d'un véhicule utilitaire selon un axe de rotation parallèle à l'axe longitudinal;
un élément de contact (9) pouvant être fixé à une deuxième partie (3) de la carrosserie, la première partie (2) et la deuxième partie (3) étant au moins l'une mobile par rapport à l'autre;
au moins un élément d'assujettissement (5) monté de façon non rotative sur la barre (4) de manière à tourner avec la barre, et comprenant au moins un premier corps de raccordement (7) fixé à la barre (4) et un appendice d'assujettissement (8) en saillie, ledit appendice d'assujettissement (8) étant mobile suite à une rotation de la barre (4), entre une première position dans laquelle il est dégagé de l'élément de contact (9) et une deuxième position dans laquelle il est assujetti avec l'élément de contact (9);
un levier d'actionnement (6) monté de façon non rotative sur la barre (4) de manière à tourner avec la barre, et comprenant au moins un deuxième corps de raccordement (11) fixé à la barre (4) et une poignée (12), un utilisateur pouvant déterminer une rotation de la barre (4) et de l'élément d'assujettissement (5) en agissant sur le levier d'actionnement (6) ;
où:
au moins l'un entre le premier corps de raccordement (7) et le deuxième corps de raccordement (11) comprend au moins un trou principal (13) s'étendant essentiellement parallèlement à l'axe longitudinal et dans lequel la barre (4) est introduite, et au moins un premier trou de fixation débouchant (14) s'étendant transversalement à l'axe longitudinal et coupant le trou principal (13); et la barre (4) comprend au moins un deuxième trou de fixation débouchant (15) s'étendant transversalement à l'axe longitudinal, et aligné axialement avec le premier trou de fixation (14) à l'intérieur du trou principal (13); et
ledit au moins l'un entre le premier corps de raccordement (7) et le deuxième corps de raccordement (11) étant fixé de façon non rotative à la barre (4) au moyen d'un élément d'accouplement permanent (16) comprenant une goupille (17) et une bague de blocage (18), la goupille (17) comprenant à son tour une tige (19) comprenant une première extrémité (20) munie d'une tête élargie (21) et une deuxième extrémité (22) à laquelle la bague de blocage (18) est associée de façon rigide, **caractérisé en ce que** la tige (19) est introduite par emboîtement avec interférence à la fois dans le premier trou de fixation (14) et dans le deuxième trou de fixation (15) pour empêcher essentiellement tous mouvements de la barre (4) et dudit au moins l'un entre le premier corps de raccordement (7) et le deuxième corps de raccordement (11) l'une par rapport à l'autre.

2. L'élément de fixation selon la revendication 1, **caractérisé en ce que** le premier trou de fixation (14) et le deuxième trou de fixation (15) ont des sections transversales circulaires.

3. L'élément de fixation selon la revendication 1 ou 2, **caractérisé en ce que** la tige (19) de la goupille (17) a la forme d'une goupille élastique pleine.

4. L'élément de fixation selon la revendication 1, 2 ou 3, **caractérisé en ce que** la tige (19) comprend extérieurement une pluralité d'éléments en saillie à extension axiale et/ou des rainures à extension axiale, au moins au niveau d'une partie respective introduite dans le premier trou de fixation (14) et dans le deuxième trou de fixation (15).

5. L'élément de fixation selon la revendication 4, **caractérisé en ce que** la tige (19) a une section transversale avec un bord extérieur comprenant une alternance de gorges (23) et de tronçons courbes (24), chaque gorge (23) comprenant au moins un premier côté (25) et au moins un deuxième côté (26).

6. L'élément de fixation selon la revendication 5, **caractérisé en ce que** chaque tronçon courbe (24) s'étend du premier côté (25) d'une gorge (23) au deuxième côté (26) de la gorge (23) suivante sur la longueur du bord extérieur.

7. L'élément de fixation selon la revendication 4, **caractérisé en ce que** la tige (19) a une section transversale avec un bord extérieur dentelé (27).

8. L'élément de fixation selon l'une quelconque des revendications précédentes, **caractérisé en ce que** l'élément d'accouplement permanent (16) est du type à cisaillement.

9. L'élément de fixation selon l'une quelconque des revendications précédentes, **caractérisé en ce que** la bague de blocage (18) est une bague pour boulons de cisaillement ou un écrou de cisaillement.

10. L'élément de fixation selon l'une quelconque des revendications précédentes, **caractérisé en ce que** la deuxième extrémité (22) de la tige (19) est rainurée ou filetée et la bague de blocage (18) est accouplée avec la deuxième extrémité (22) par le biais de sa propre déformation localisée.

11. L'élément de fixation selon l'une quelconque des revendications précédentes, **caractérisé en ce que** la bague comprend une première portion annulaire (28), au moins en utilisation plus près de la tête élargie (21), qui est intérieurement filetée et vissée sur la deuxième extrémité (22) de la tige (19), et une deuxième portion annulaire (29) qui est à perdre.

12. L'élément de fixation selon l'une quelconque des revendications précédentes, **caractérisé en ce qu'**il comprend au moins un élément d'assujettissement (5) qui constitue une pièce unique avec au moins une partie du levier d'actionnement (6), les premier corps de raccordement (7) et deuxième corps de raccordement (11) correspondants coïncidant, et l'appendice d'assujettissement (8) et la poignée (12) s'étendant sur des côtés opposés de la barre (4).

13. Un procédé pour monter de façon non rotative un élément d'assujettissement ou un levier d'actionnement sur une barre d'un élément de fixation pour les carrosseries de véhicules utilitaires, où la barre (4) s'étend essentiellement le long d'un axe longitudinal rectiligne, l'élément d'assujettissement (5) comprend au moins un premier corps de raccordement (7) à fixer à la barre (4) et le levier d'actionnement (6) comprend au moins un deuxième corps de raccordement (11) à fixer à la barre (4), le procédé comprenant les phases opérationnelles consistant à :
réaliser respectivement dans le premier corps de raccordement (7) ou dans le deuxième corps de raccordement (11), au moins un trou principal (13) s'étendant le long d'une première direction, et au moins un premier trou de fixation débouchant (14) s'étendant transversalement à la première direction et coupant le trou principal (13);
réaliser dans la barre (4) au moins un deuxième trou de fixation débouchant (15) s'étendant transversalement à l'axe longitudinal; introduire la barre (4) dans le trou principal (13) et aligner axialement le premier trou de fixation (14) et le deuxième trou de fixation (15); et raccorder entre eux la barre (4) et respectivement le premier corps de raccordement (7) ou le deuxième corps de raccordement (11) au moyen d'un élément d'accouplement permanent (16);
où la phase de raccordement comprend:
utiliser un élément d'accouplement permanent (16) comprenant une tige (19) ayant une première extrémité (20) munie d'une tête élargie (21) et une deuxième extrémité (22) qui est rainurée ou filetée, et une bague de blocage (18);
introduire la tige (19) par emboîtement avec interférence dans le premier trou de fixation (14) et dans le deuxième trou de fixation (15) jusqu'à ce que la tête élargie (21) vienne buter respectivement sur le premier corps de raccordement (7) ou sur le deuxième corps de raccordement (11), et jusqu'à ce que la deuxième extrémité (22) de la tige (19) sorte au moins partiellement du côté opposé du premier trou de fixation (14);
monter en cisaillement la bague de blocage (18) sur la deuxième extrémité (22).

14. Le procédé selon la revendication 13, où la tige (19) fait partie d'une goupille (17) qui comprend aussi un appendice à perdre (30) axialement aligné avec la tige (19) et raccordé d'une seule pièce à la deuxième extrémité (22), et où la phase de montage en cisaillement de la bague de blocage (18) prévoit d'effectuer essentiellement en même temps une action de traction axiale sur l'appendice à perdre (30) et un écrasement de la bague de blocage (18) sur la deuxième extrémité (22).

15. Le procédé selon la revendication 13 ou 14, où une goupille (17) avec une tige pleine (19) ayant la forme d'une goupille élastique est utilisée.

16. Le procédé selon l'une quelconque des revendications de 13 à 15, où une goupille (17) est utilisée qui a une tige (19) qui, au moins au niveau d'une partie respective devant être introduite dans le premier trou de fixation (14) et dans le deuxième trou de fixation (15), comprend extérieurement une pluralité d'éléments en saillie à extension axiale et/ou des rainures à extension axiale.

17. Le procédé selon la revendication 16, où une goupille (17) est utilisée qui a une tige (19) ayant une section transversale délimitée par un bord extérieur comprenant une alternance de gorges (23) et de tronçons courbes (24) distribués sur sa longueur, chaque gorge (23) comprenant au moins un premier côté (25) et au moins un deuxième côté (26).

18. Le procédé selon la revendication 16, où une tige (19) est utilisée qui a une section transversale avec un bord extérieur dentelé (27).
